# EUROPEAN PATENT APPLICATION

(11) **EP 4 603 337 A1**
(43) Date of publication of application: **20.08.2025**
(21) Application number: 25151908.8
(22) Date of filing: 15.01.2025
(51) Int. Cl.: B60R 16/02

(54) **CATCHING MECHANISM FOR MOUNTING MODULES IN AN AGRICULTURAL MACHINE**

(30) Priority: 15.02.2024 GB 202402124
(71) Applicant: AGCO International GmbH, 8212 Neuhausen am Rheinfall (CH)
(72) Inventor: Hepp, Fabian, 87616 Marktoberdorf (DE)
(74) Representative: AGCO Intellectual Property Department

(57) **Abstract**

An agricultural machine (100) is equipped with a cabin (102), a mounting volume (104) arranged below the cabin (102), a hatch (108) for providing access to the mounting volume (104) from a top side and a catching mechanism (204) for mounting at least one module (208, 214, 220) in the mounting volume (104).

## Description

### FIELD

The present disclosure relates generally to modules of a stacking arrangement and mechanical fixation structure for mounting one or more modules in an agricultural machine.

### BACKGROUND

U.S. Patent 7,808,775 B2, "Modular power distribution system having sealing arrangement for use in a work machine," granted October 5, 2010, discloses a work machine with a power distribution system for supplying electrical power to four traction motors of the work machine. The power distribution system comprises several power electronic modules that are stacked in a module rack. The module rack has an opening for each module for slidably receiving the corresponding module by moving the module in a lateral direction into the rack.

### BRIEF SUMMARY

Mounting volume in agricultural machines for installing any modules of the agricultural machine such as control unit modules or power electronic modules may be rather limited. Additionally, access to this mounting volume for installing or replacing such modules may be very restricted. Hence, it is an objective to provide a user-friendly arrangement for a comfortable installation of modules in a difficult accessible mounting volume of an agricultural machine.

According to an aspect of the invention there is provided an agricultural machine with a cabin, a mounting volume arranged below the cabin, a hatch for providing access to the mounting volume from a top side, and a catching mechanism for mounting at least one module in the mounting volume.

The agricultural machine may be a vehicle or a vehicle-implement combination such as a tractor towing a trailer or a plough. The cabin provides a room enclosed by a roof, windshield, rear window, a door, a side panel and a floor for an operator to control the agricultural machine. The cabin may be equipped with a seat and a user interface such as a steering wheel and pedals to control movement of the agricultural machine. The seat and the pedals may be arranged on the floor. The hatch may be integrated in the floor and may be closed by a pivotable cap to open the hatch. When the hatch is opened, the mounting volume below the floor of the cabin is accessible from the cabin for installing or removing modules in the mounting volume. The modules may be passed through the hatch and moved towards the catching mechanism. When the module gets in contact with the catching mechanism, the module is guided into a fixed position. Hence, a user-friendly installation can be achieved since only a rough manual positioning of the module in the mounting volume below the cabin is required for a precise fixation of the module due to the self-positioning effect of the catching mechanism.

The mounting volume may be accessible for mounting the at least one module from the top side only.

I. e., the hatch in the floor of the cabin may be the sole access to the mounting volume. Since the mounting volume is accessible from the cabin only, the mounting volume can be easily protected against unauthorized access. In addition, the mounting volume may be trough-shaped and can also be protected by a solid housing without any access from the outside of the agricultural machine to provide a high protection against any environmental impacts. Hence, sensitive modules such as electronics modules, e. g. power electronics module or control module, can be integrated in the mounting volume.

The agricultural machine may comprise a cover covering a top side of the mounting volume at least partly. The catching mechanism may be arranged below the cover.

The cover may be part of the floor of the cabin and/or the housing to protect the modules from any external impact, e. g. such as dust, moisture, etc. The cover may also be used to arrange or attach any components of the cabin, such as the pedals.

The catching mechanism may comprise at least one opening.

The catching mechanism may be used for fixation of a module in the mounting volume. For fixation, the module may be manually moved towards the catching mechanism. Although the accessibility to the mounting volume may be restricted, a precise manual movement or placement of the module in the mounting volume is not required for fixing the module. When the module is moved towards the catching mechanism, the module may be fetched by the opening to guide the module into a defined position for final fixation in the mounting volume. I. e., the opening is used as a guidance for supporting the self-positioning effect.

The at least one opening may comprise a slot.

The slot may provide a centering for the module for holding the module in the defined position. The module may be hold by the slot in the defined position also in case of vibrations of the mounting volume, e. g. caused by a movement of the agricultural machine over a rough terrain. The opening may guide the threading element of the module into the slot so that the threading element may be centered. When the threading element has been centered, the module may be fixed in the mounting volume with a fixation element such as a screw.

The catching mechanism may comprise at least one threading element insertable in the at least one opening.

The threading element may be formed by a (metal) sheet. The threading element may be attached to the module. When the module is moved towards the opening, the threading element may be fetched by the opening of the catching mechanism. The threading element may also be guided by the opening so that the threading element will be moved in the slot for centering.

The at least one threading element may comprise a protrusion catchable by the at least one opening.

The protrusion may support ease of use to get the threading element fetched by the catching mechanism. When the module is moved towards the catching mechanism, the protrusion may get in contact with the catching mechanism and then slide into the opening of the catching mechanism. Then, the threading element is fetched by the catching mechanism.

The protrusion may provide a profile for centering the at least one threading element in a vertical direction and a lateral direction.

I. e, when the threading element is centered in the vertical (horizontal) and the lateral direction, the module may be axially moveable in a longitudinal direction only. An axial movement in the vertical or lateral direction of the module may not be possible since the centering restricts a movement in these both degrees of freedom. So, the position for integrating the module in the mounting volume is clearly defined.

The at least one threading element comprises an abutment for abutting the threading element in a longitudinal direction.

When the threading element is inserted into the opening of the catching mechanism by an axial movement in the longitudinal direction, the movement in this third degree of freedom may also be restricted if the abutment gets in contact with another part of the catching mechanism, e. g. a catching sheet. Then, the module may be pulled back only to remove the module from the mounting volume. The movement in the longitudinal direction may correspond to the driving direction of the agricultural machine.

The at least one threading element may be L-shaped.

The horizontal portion of the L-shaped threading element may be inserted into the opening of the catching mechanism when the module is integrated in the mounting volume. The vertical portion of the L-shaped threading element may be used as abutment to limit the axial movement into the longitudinal direction when the threading element is inserted into the opening. The length of the vertical portion of the L-shaped threading element may be adapted to a specific height at which the module may be integrated in the mounting volume.

The agricultural machine may comprise at least one module. The at least one threading element may be attached to the at least one module, and the at least one opening may be integrated in a catching sheet.

The threading element may be fixed to the module by screws, glue or anything else. For integrating the module on the mounting volume, the module may be moved so that the threading element may be moved towards the opening in the catching sheet, inserted and caught by the opening. Then, the module can be moved in the longitudinal direction until the abutment prevents a further movement in this direction. For example, the threading element may abut against the catching sheet. While the threading element is moved in the longitudinal direction, the threading element may be simultaneously centered as described above.

The agricultural machine may comprise at least one module. The at least one threading element may be attached to a catching sheet, and the at least one opening may be arranged at the at least one module.

The openings may be integrated in the housing of the module or can be integrated in another component of the module. The threading element may be fixed in the mounting volume by screws, glue or anything else. Also for this configuration, the module can be moved in the longitudinal direction until the abutment prevents a further movement in this direction. For example, the threading element may abut against the housing of the module. While the threading element is inserted in the longitudinal direction, the threading element may be simultaneously centered similarly as described above.

The catching sheet may be attached in the mounting volume of the agricultural machine.

The catching sheet may be fixed in the mounting volume by screws, glue or anything else.

The agricultural machine may comprise at least one additional module. At least one opening or at least one threading element may be attached to the at least one module, and the at least one additional module may be attached to the at least one threading element or the at least one opening of the at least one module.

I. e., if the threading element is attached to the module the additional module may comprise the opening so that the threading element of the module can be caught by the opening of the additional module. Alternatively, the module may comprise the opening and the additional module may comprise the threading element catchable by the opening. Thus, at least two modules can be stacked together to integrate more than one module in the mounting volume.

The catching mechanism may comprise a first bracket and a second bracket. The first bracket may be attached to the at least one module, and the second bracket may be attached to the at least one additional module. The first bracket of the at least one module may be fixed to the second bracket of the at least one additional module.

Hence, at least two modules being stacked together can also be fixed together to provide combined modules.

The first bracket of the at least one module may be fixed in the mounting volume.

Thus, all modules of combined modules can be fixed in the mounting volume by a fixation of the bracket of a single module in the mounting volume. The other modules of the combined modules may be fixed indirectly in the mounting volume due to the fixation to the module fixed in the mounting volume.

The agricultural machine may comprise at least two modules. The catching mechanism may comprise at least two threading elements and at least two openings. The at least two threading elements and the at least two openings may be arranged in a lateral direction, and the at least two modules may be arranged in a vertical direction.

Hence, the at least two modules can be horizontally stacked in the mounting volume about each other. When the modules are stacked together, the threading elements and the openings may be at the same horizonal height due to the lateral arrangement. This height may be very close to the bottom of the mounting volume since an integration of the modules in the mounting volume may be much easier in case of a lower height compared to a higher height close to the cover covering the top side of the mounting volume.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine with a stacking arrangement in a mounting volume.
FIG. 2 illustrates the mounting volume with an integrated module.
FIG. 3 illustrates a module.
FIG. 4 illustrates the mounting volume with an integrated module.
FIG. 5 illustrates a threading element of a catching mechanism.
FIG. 6 illustrates an opening of a catching mechanism.
FIG. 7 illustrates two modules of the stacking arrangement.
FIG. 8 illustrates three modules of the stacking arrangement.
FIG. 9 illustrates the mounting volume with three integrated modules.

### DETAILED DESCRIPTION

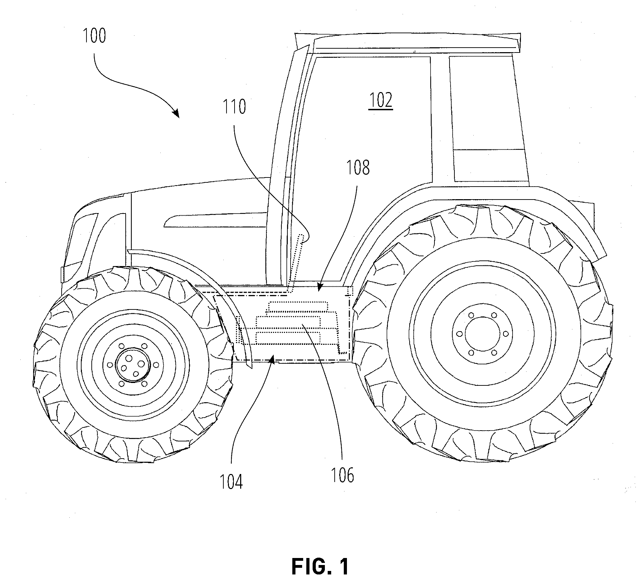

FIG. 1 shows exemplarily an agricultural machine 100. The agricultural machine 100 may be a vehicle or a vehicle-implement combination. The vehicle may generate a tractive force to tow the implement through the agricultural field. The vehicle may be an agricultural vehicle such as a tractor, a harvester, a combine, a sprayer or of any other type such as a truck. The implement may be used for an operation in the agricultural field and may be of the type of a plough, a rake, a planter, a sprayer, a mower, a trailer, etc. The agricultural machine 100 may be controlled by an operator sitting in a cabin 102 of the agricultural machine. Below the cabin 102, there is a mounting volume 104 in the agricultural machine 100 for integrating any components such as a stacking arrangement 106. The mounting volume 104 is an enclosed volume and may be trough-shaped. The mounting volume 104 is accessible via a hatch 108 for integrating or removing components integrated in the mounting volume 104. The hatch 108 is arranged at a top side of the mounting volume 104 that forms part of a floor of the cabin 102. I. e., the mounting volume 104 is accessible from the cabin 102 and from a top side of the mounting volume 104. A cap 110 arranged at the hatch 108 can be manually moved in an opened or closed position to control accessibility of the hatch 108.

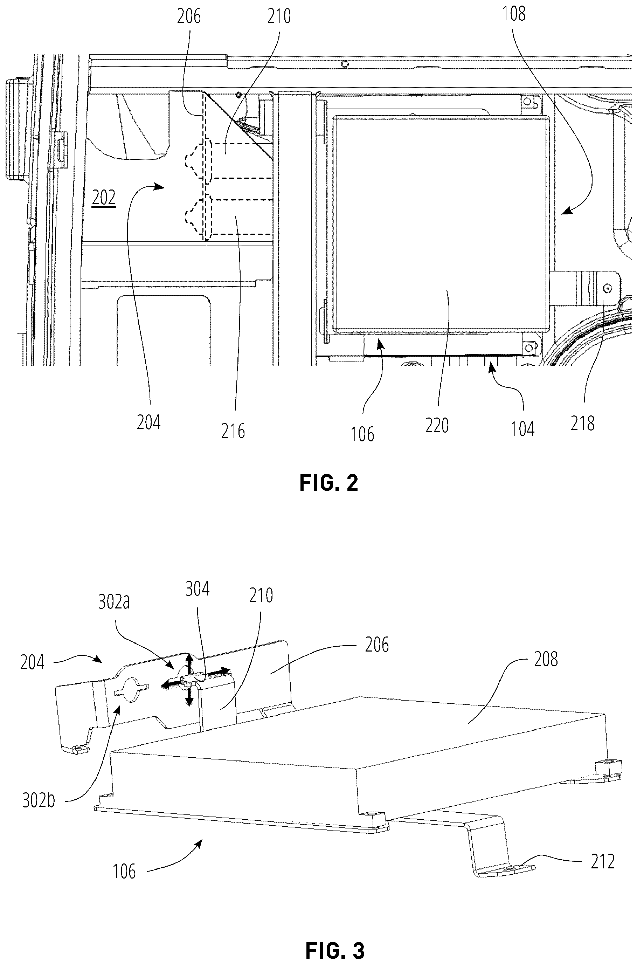

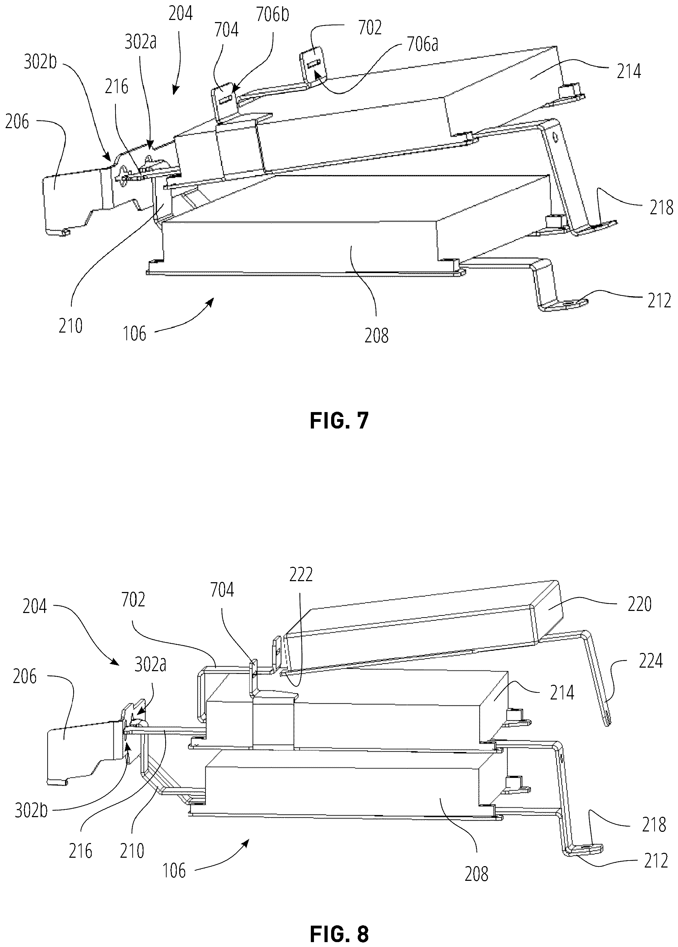

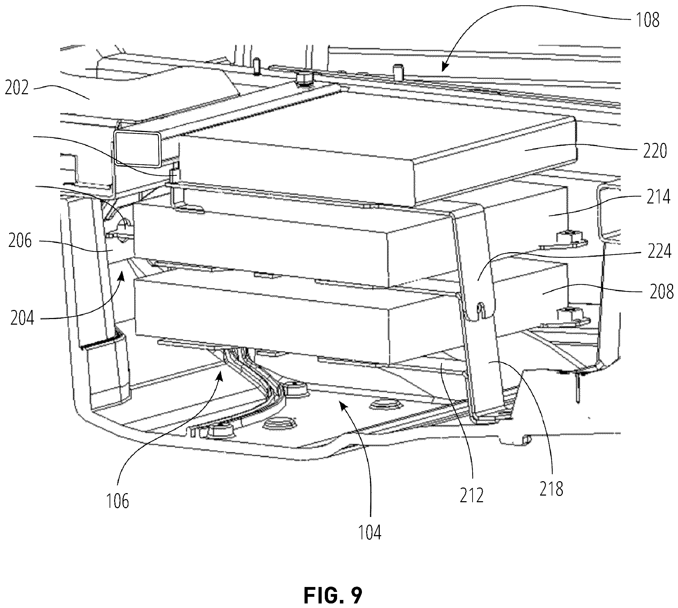

FIG. 2 shows the mounting volume 104 with the integrated stacking arrangement 106 from a top side. The hatch 108 is opened so that the stacking arrangement 106 and the mounting volume 104 are accessible. The stacking arrangement 106 comprises three modules 208, 214 and 220 (see FIG. 8 and FIG. 9), a catching mechanism 204 and brackets 212, 218 and 224 (see FIG. 8 and FIG. 9). The top side of the mounting volume 104 and parts of the stacking arrangement 106 below the top side, e. g. the catching mechanism 204, are at least partly covered by a cover 202. The cover 202 may be part of the floor of the cabin 102.

The stacking arrangement 106 is fixed in the mounting volume 104. At least one of the brackets is attached to a ground of the mounting volume 104 and may be fixed by screws. A catching sheet 206 of the catching mechanism 204 is also fixed in the mounting volume 104 and may be glued or welded. Threading elements 210, 216 of the catching mechanism 204 are attached to the modules 208, 214 of the stacking arrangement 106. The threading elements 210, 216 are inserted in the catching sheet 206 for fixing the modules to the catching sheet 206 (as explained in more detail below).

The modules 208, 214, 220 may be any component of the agricultural machine 100 such as electric components, as for example a control unit, power electronics, communication electronics, electronic interfaces, etc. Each module is encapsulated in a separate housing. The threading elements and the brackets may be attached to a housing of a module.

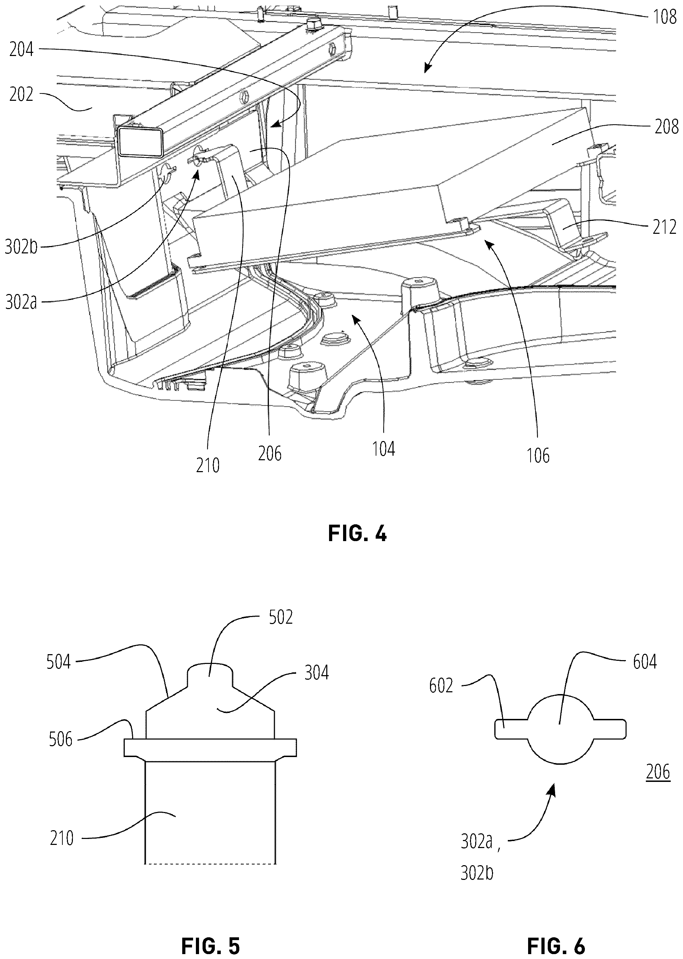

FIG. 3 and FIG. 4 illustrate the mounting of a first module 208 of the stacking arrangement 106 in the mounting volume 104 by attaching the module 208 to the catching mechanism 204. The module 208 may be carried from the cabin 102 through the hatch 108 into the mounting volume 104 and moved towards the catching sheet 206 of the catching mechanism 204 as illustrated.

The catching sheet 206 comprises two openings 302a and 302b. Each of these openings 302a and 302b has a hole 604 and a slot 602 as shown in FIG. 6. The two openings 302a and 302b are arranged in a lateral direction (i. e. at the same horizontal height) next to each other.

The threading element 210 is L-shaped. A proximal part of the L-shaped threading element 210 is fixed to the housing of the module 208. A protrusion 304 forms a distal part of the L-shaped threading element 210. The protrusion 304 is profiled for inserting the threading element 210 into the opening 302a of the catching sheet 206 as can be seen in FIG. 5. The protrusion 304 of the L-shaped threading element 210 comprises an abutment 506. From the abutment 506, the profile 504 of the protrusion 304 tapers to a nose 502. The dimensions of the nose 502 are smaller than the dimensions of the hole 604. Due to the different dimensions, the threading element 210 can be easily fetched by the opening 302a of the catching sheet 206 when the module 208 is moved towards the catching mechanism 204 for integrating the module 208 in the mounting volume 104. The nose 502 can be inserted into the hole 604 even when the nose 502 is not exactly centered in respect of the hole 604. Hence, a rough positioning of the nose 502 in respect of the opening 302a is sufficient to get the protrusion 304 of the threading element 210 fetched by the catching mechanism 204. As indicated by the two arrows at the opening 302a in FIG. 3, the threading element 210 including the module 208 can still be moved in a lateral or vertical direction when the nose 502 is inserted in the opening 302a.

When the nose 502 was fetched by the catching mechanism 204, the module 208 may be moved further in a longitudinal direction towards the catching mechanism 204. Then, the threading element 210 gets into alignment with the opening 302a. The tapered protrusion 304 of the threading element 210 moves into the slot 602 of the opening 302a so that the threading element 210 is centered in respect of the opening 302a in a vertical and lateral direction. I. e., a movement of the module 208 in these two directions will be restricted and only a movement of the module 208 in the longitudinal direction will be possible until the abutment 506 of the threading element 210 gets in contact with the catching sheet 206. When the threading element 210 abuts against the catching sheet 206, a predefined position for mounting the module 208 in the mounting volume 104 has been reached. Then, the module 208 can be fixed to the ground of the mounting volume 104 by fixing the bracket 212 attached to the module 208 with a screw. Thus, the first module 208 of the stacking arrangement 106 has been integrated and fixed in the mounting volume 104.

As shown in FIG. 7, a second module 214 of the stacking arrangement 106 can be integrated and fixed in the mounting volume 104 similarly to the first module 208. The second module 214 may also be carried from the cabin 102 through the hatch 108 into the mounting volume 104 and moved towards the catching sheet 206 of the catching mechanism 204.

The threading element 216 is attached to the module 214. The threading element 216 has the same protrusion 304 as the threading element 210 as shown in FIG. 5. The second opening 302b of the catching sheet 206 has the same hole 604 and slot 602 as the first opening 302a as shown in FIG. 6. Consequently, the threading element 216 of the second module 214 can be fetched in the same way by the opening 302b as the threading element 210 of the first module 208 by the opening 302a (as described above). Due to the different dimensions, the threading element 216 can be easily fetched by the opening 302b of the catching sheet 206 when the module 214 is moved towards the catching mechanism 204 for integrating the module 214 in the mounting volume 104.

When the nose 502 of the threading element 216 was fetched by the catching mechanism 204, the module 214 may be moved further in a longitudinal direction towards the catching mechanism 204. Then, the threading element 216 gets into alignment with the opening 302b. The tapered protrusion 304 of the threading element 216 moves into the slot 602 of the opening 302b so that the threading element 216 is centered in respect of the opening 302b in a vertical and lateral direction. I. e., a movement of the module 214 in these two directions will be restricted and only a movement of the module 214 in the longitudinal direction will be possible until the abutment 506 of the threading element 216 gets in contact with the catching sheet 206. When the threading element 216 abuts against the catching sheet 206, a predefined position for mounting the module 214 in the mounting volume 104 has been reached. Then, the module 214 can be fixed to the ground of the mounting volume 104 by fixing the bracket 218 attached to the module 214 with a screw. Thus, first and second modules 208 and 214 of the stacking arrangement 106 have been integrated and fixed in the mounting volume 104.

Due to the arrangement of the two openings 302a and 302b in the lateral direction, the two threading elements 210 and 216 of the modules 208 and 214 are also arranged in the lateral direction (i. e. at the same horizontal height) next to each other, as can be seen in FIG. 7. Instead, the two modules 208, and 214 are arranged in a vertical direction and take place at different horizontal heights for forming a stack.

In addition to the threading element 216, groove sheets 702 and 704 are attached to the module 214. A proximal part of the groove sheet 702 and a proximal part of the groove sheet 704 are fixed to the housing of the module 214. Each groove sheet 702 and 704 comprises a distal part extending away from the module 214. Each groove sheet 702, 704 comprises an opening 706a, 706b integrated in the distal part of each groove sheet 702, 704. The openings 706a and 706b are similar to the openings 302a and 302b of the catching sheet 206 and may comprise a hole 604 and a slot 602 as shown in FIG. 6.

As shown in FIG. 8 and FIG. 9, a third module 220 of the stacking arrangement 106 can be integrated and fixed in the mounting volume 104. The third module 220 may also be carried from the cabin 102 through the hatch 108 into the mounting volume 104 and moved towards the groove sheets 702, 704 of the second module 214.

A threading element 222 is attached to the module 220. The threading element 222 has a protrusion being similar to the protrusion 304 as shown in FIG. 5 so that the protrusion can be inserted into the opening 706a of the groove sheet 702 or opening 706b of the groove sheet 704. An abutment of the protrusion of the threading element 222 can be used to abut the threading element 222 against the groove sheet 702 or 704.

Similarly to the first and second module 208, 214, the threading element 222 of the third module 220 can be fetched by the opening 706a of the groove sheet 702 or opening 706b of the groove sheet 704. Due to the different dimensions, the threading element 222 can be easily fetched by the opening 706a or 706b when the module 220 is moved towards the groove sheet 702 or 704 for integrating the module 220 in the mounting volume 104.

When the nose 502 of the threading element 222 was fetched, the module 220 may be moved further in a longitudinal direction towards the groove sheet 702 or 704. Then, the threading element 222 gets into alignment with the opening 706a or 706b. The tapered protrusion of the threading element 222 moves into the slot 602 of the opening 706a or 706b so that the threading element 222 is centered in respect of the opening 706a or 706b in a vertical and lateral direction. I. e., a movement of the module 220 in these two directions will be restricted and only a movement of the module 220 in the longitudinal direction will be possible until the abutment 506 of the threading element 222 gets in contact with the groove sheet 702 or 704. When the threading element 222 abuts against the groove sheet 702 or 704, a predefined position for mounting the module 220 in the mounting volume 104 has been reached. Then, the module 220 can be fixed in the mounting volume 104 by fixing the bracket 224 attached to the module 220 with a screw to the bracket 218 of the second module 214. Thus, first, second and third modules 208, 214 and 220 of the stacking arrangement 106 have been integrated and fixed in the mounting volume 104.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 100 | agricultural machine | 204 | catching mechanism |
| 102 | cabin | 206 | catching sheet |
| 104 | mounting volume | 208 | module |
| 106 | stacking arrangement | 210 | threading element |
| 108 | hatch | 212 | bracket |
| 110 | cap | 214 | module |
| 202 | cover | 216 | threading element |
| 218 | bracket | | |
| 220 | module | | |
| 222 | threading element | | |
| 224 | bracket | | |
| 302a | opening | | |
| 302b | opening | | |
| 304 | protrusion | | |
| 502 | nose | | |
| 504 | profile | | |
| 506 | abutment | | |
| 602 | slot | | |
| 604 | hole | | |
| 702 | groove sheet | | |
| 704 | groove sheet | | |
| 706a | opening | | |
| 706b | opening | | |

## Claims

1. An agricultural machine (100), comprising:
a cabin (102);
a mounting volume (104) arranged below the cabin (102);
a hatch (108) for providing access to the mounting volume (104) from a top side; and
a catching mechanism (204) for mounting at least one module (208, 214, 220) in the mounting volume (104).

2. The agricultural machine (100) of claim 1, wherein
the mounting volume (104) is accessible for mounting the at least one module (208, 214, 220) from the top side only.

3. The agricultural machine (100) of claim 1 or 2, comprising
a cover (202) covering a top side of the mounting volume (104) at least partly; wherein the catching mechanism (204) is arranged below the cover (202).

4. The agricultural machine (100) of any one of claims 1 to 3, wherein
the catching mechanism (204) comprises at least one opening (302a, 302b, 706a, 706b).

5. The agricultural machine (100) of claim 4, wherein
the catching mechanism (204) comprises at least one threading element (210, 216, 222) insertable in the at least one opening (302a, 302b, 706a, 706b).

6. The agricultural machine (100) of claim 5, wherein
the at least one threading element (210, 216, 222) comprises a protrusion (304) catchable by the at least one opening (302a, 302b, 706a, 706b).

7. The agricultural machine (100) of claim 6, wherein
the protrusion (304) provides a profile (504) for centering the at least one threading element (210, 216, 222) in a vertical direction and a lateral direction.

8. The agricultural machine (100) of any one of claims 5 to 7, wherein
the at least one threading element (210, 216, 222) comprises an abutment (506) for abutting the threading element (210, 216, 222) in a longitudinal direction.

9. The agricultural machine (100) of any one of claims 5 to 8, wherein
the at least one threading element (210) is L-shaped.

10. The agricultural machine (100) of any one of claims 5 to 8, comprising
at least one module (214); wherein
the at least one threading element (216) is attached to the at least one module (214); and
the at least one opening (302a, 302b) is integrated in a catching sheet (206).

11. The agricultural machine (100) of any one of claims 5 to 8, comprising
at least one module (214); wherein
the at least one threading element (216) is attached to a catching sheet (206); and
the at least one opening (302a, 302b) is arranged at the at least one module (214).

12. The agricultural machine (100) of any one of claims 10 to 11, comprising
at least one additional module (220); wherein
at least one opening (706a, 706b) or at least one threading element (216) is attached to the at least one module (214); and
the at least one additional module (220) is attached to the at least one threading element (216) or the at least one opening (706a, 706b) of the at least one module (214).

13. The agricultural machine (100) of claim 12, wherein
the catching mechanism (204) comprises a first bracket (218) and a second bracket (224); wherein
the first bracket (218) is attached to the at least one module (214); and
the second bracket (224) is attached to the at least one additional module (220); wherein
the first bracket (218) of the at least one module (214) is fixed to the second bracket (224) of the at least one additional module (220).

14. The agricultural machine (100) of claim 13, wherein
the first bracket (218) of the at least one module (214) is fixed in the mounting volume (104).

15. The agricultural machine (100) of any one of claims 10 to 14, comprising
at least two modules (208, 214); and
the catching mechanism (204) comprising
at least two threading elements (210, 216); and
at least two openings (302a, 302b);
wherein
the at least two threading elements (210, 216) and the at least two openings (302a, 302b) are arranged in a lateral direction; and
the at least two modules (208, 214) are arranged in a vertical direction.
